# EUROPÄISCHE PATENTSCHRIFT

(11) **EP 4 363 277 B1**
(45) Veröffentlichungstag und Bekanntmachung des Hinweises auf die Patenterteilung: **15.10.2025**
(21) Anmeldenummer: 22732056.1
(22) Anmeldetag: 30.05.2022
(51) Int. Cl.: B60R 21/01, B60R 21/017, B60R 21/013

(54) **STEUERGERÄT FÜR EIN PERSONENSCHUTZSYSTEM**
CONTROL DEVICE FOR A PERSONAL PROTECTION SYSTEM
APPAREIL DE COMMANDE POUR UN SYSTÈME DE PROTECTION DE PERSONNES

(30) Priorität: 01.07.2021 DE 102021206946
(43) Veröffentlichungstag der Anmeldung: 08.05.2024
(73) Patentinhaber: Robert Bosch GmbH, 70442 Stuttgart (DE)
(72) Erfinder: SIEMSS, Matthias, 72810 Gomaringen (DE); SCHUMACHER, Hartmut, 71691 Freiberg (DE); KOEPKE, Thorsten, 72766 Reutlingen (DE); VASYLENKO, Roman, 72762 Reutlingen (DE)
(86) Internationale Anmeldenummer: PCT/EP2022/064590
(87) Internationale Veröffentlichungsnummer: WO 2023/274642

(56) Entgegenhaltungen:
- DE-A1- 102007 012 463
- DE-A1- 102019 210 706

## Beschreibung

Die Erfindung betrifft ein Steuergerät für ein Personenschutzsystem.

Aus dem Stand der Technik sind als Airbagsysteme ausgeführte Personenschutzsysteme mit einem Steuergerät bekannt, welches an einen Fahrzeugdatenbus, wie beispielsweise einen CAN-Datenbus, Flex-Ray-Datenbus etc. angeschlossen ist. Hierbei dient die Verbindung mit dem Fahrzeugdatenbus Diagnosezwecken, Verhaltensoptimierung und der Übermittlung von Sensordaten aus dem Airbagsystem an andere Fahrzeugsysteme, wie beispielsweise einem ESP-System und/oder ABS-System. Die Übermittlung allgemeiner Daten wie Datum, Uhrzeit, Temperatur, Geschwindigkeit, Beladung; Benutzungsstatistik; Batteriemanagement; Regensensor; ESP/ABS-Eingriffe etc. an das Steuergerät des Airbagsystem dienen der Optimierung und der Dokumentation und haben aber keinen direkten Einfluss auf die Auslöseentscheidung. Da das Steuergerät über nicht flüchtige Speichermöglichkeiten auch im Falle von Batterieabriss verfügt, werden im Crashfall oder bei anderen definierten Situationen (Beinahe Crashs) neben rückhaltesystemspezifischen Daten auch Daten von anderen Fahrzeugsystemen, die etwas zum Status des Fahrzeugs und seiner Bedienung vor, während und nach Crash beitragen, an das Steuergerät des Airbagsystems zur Speicherung übertragen. Zudem sind Steuergeräte für Personenschutzsysteme bekannt, welche neben einem Hauptprozessor aus Gründen der Redundanz und Diversität einen zusätzlichen Prozessor mit geringerer Leistung für Sicherheits- und/oder Authentifizierungsaufgaben einsetzen.

Aus der DE 10 2007 012 463 A1 sind ein Steuergerät und ein Verfahren zur Ansteuerung von Personenschutzmitteln bekannt. Hierbei werden die Personenschutzmittel durch einen Prozessor in Abhängigkeit von wenigstens einem Sensorsignal angesteuert. Weiterhin ist ein Sicherheitscontroller vorgesehen, welcher die Ansteuerung in Abhängigkeit von dem wenigstens einen Sensorsignal freigibt. Ein Baustein formatiert ein von außerhalb eines Steuergeräts stammenden Bussignal, das das wenigstens eine Sensorsignal aufweist, für den Sicherheitscontroller um und stellt es bereit.

### Offenbarung der Erfindung

Das Steuergerät für ein Personenschutzsystem mit den Merkmalen des unabhängigen Patentanspruchs 1 hat den Vorteil, dass für den wachsenden Markt von Fahrzeugen mit Fahrerassistenzsystemen ein optimiertes Konzept für noch leistungsfähigere Personenschutzsysteme bereitgestellt wird, welches in der Lage ist, auslöserelevante Informationen von Fahrerassistenzsystemen, wie beispielsweise aus Videoauswertung, Radarauswertung; LiDAR-Auswertung etc. aber auch von anderen Systemen, wie beispielsweise ESP- und/oder ABS-Systemen, bei der Auslöseentscheidung von Personenschutzmitteln, wie beispielsweise Airbags, Gurtstraffer, etc. zu berücksichtigen. Zudem können Ausführungsformen des Steuergeräts auch weitere Sicherheitsaufgaben, wie beispielsweise die Abtrennung von Hochspannungsderivaten der Elektromobilität bis 800V übernehmen.

Bei Ausführungsformen des Steuergeräts kann ein zentraler integrierter Sicherheitsschaltkreis mit einem Nebenprozessor durch Mitlesen von auf unterschiedlichen Fahrzeugdatenbusen (LIN; CAN; CAN-FD; FLexRay, Ethernet; Bluetooth etc.) übertragenen Daten komplexere auslöserelevante Informationen in den mitgelesenen Daten erkennen und entsprechende Algorithmen zur Auswertung der auslöserelevanten Informationen bereitstellen. Basierend auf der Auswertung der auslöserelevanten Informationen kann der zentrale Sicherheitsschaltkreis einen vollständigen oder partiellen Zugriff auf Personenschutzmittel oder auf Personenschutzmittelgruppen zur Auslösung freigeben, damit ein Hauptprozessor die Auslösung der freigegebenen Personenschutzmittel zum exakten Aktivierungszeitpunkt vornehmen kann. Ferner kann durch ein Zusammenwirken von Hauptprozessor und Nebenprozessor des zentraler Sicherheitsschaltkreis in einer Startphase bei nicht aktivem Personenschutzsystem eine Verwendung von Flashspeichern gänzlich vermieden werden. Auch können durch den Nebenprozessor des zentralen integrierten Sicherheitsschaltkreises sicherheitsrelevante Plausibilitätsprüfungen für Daten durchgeführt werden, welche das Steuergerät durch den Hauptprozessor auf einem korrespondierenden Fahrzeugdatenbus bereitstellen möchte. Zudem kann das Sicherheitskonzept des Personenschutzsystems einfach durch geänderte Software an zukünftige Anforderungen angepasst werden.

Ausführungsformen der vorliegenden Erfindung stellen ein Steuergerät für ein Personenschutzsystem zur Verfügung, welches als Komponenten zumindest einen Hauptprozessor, welcher ausgeführt ist, in Abhängigkeit von auslöserelevanten Informationen mindestens ein Auslösesignal für mindestens ein Auslöseelement von Personenschutzmitteln des Personenschutzsystems zu erzeugen und auszugeben, einen zentralen Sicherheitsschaltkreis mit einem Nebenprozessor, welcher ausgeführt ist, in Abhängigkeit von den auslöserelevanten Informationen mindestens ein Freigabesignal für das mindestens eine Auslöseelement der Personenschutzmittel zu erzeugen und auszugeben, einen integrierten Hauptsystemschaltkreis, welcher ausgeführt ist, in Abhängigkeit des mindestens einen Auslösesignals und des mindestens einen Freigabesignals mindestens ein Ansteuersignal zur Auslösung des mindestens einen Auslöseelements der Personenschutzmittel zu erzeugen und auszugeben, und mindestens einen Steuergerätedatenbus umfasst, über welchen der Hauptprozessor mit den anderen Komponenten des Steuergeräts kommuniziert. Hierbei umfasst der zentrale Sicherheitsschaltkreis mindestens eine externe Busschnittstelle, über welche der Hauptprozessor mit mindestens einem externen Fahrzeugdatenbus kommuniziert, und mindestens eine interne Busschnittstelle, welche mit dem mindestens einen Steuergerätedatenbus verbunden ist. Die auslöserelevanten Informationen sind über den mindestens einen Steuergerätedatenbus und/oder den mindestens einen externen Fahrzeugdatenbus übertragbar, wobei die mindestens eine externe Busschnittstelle und die mindestens eine interne Busschnittstelle jeweils ausgeführt sind, die über den mindestens einen externen Fahrzeugdatenbus oder den mindestens einen Steuergerätedatenbus kommunizierten Daten mitzulesen und die auslöserelevanten Informationen zu erkennen und zusätzlich an den Nebenprozessor zur Auswertung zu übertragen.

In Ausführungsformen des erfindungsgemäßen Steuergeräts kann der zentrale integrierte Sicherheitsschaltkreis, welcher zur Erkennung von auslöserelevanten Informationen in Daten von mindestens einem Fahrzeugbussystem mindestens eine externe Busschnittstelle umfasst, entsprechend den Anforderungen angepasst und ausgerichtet werden, ohne auf die Auslösearchitektur für die Personenschutzmittel im integrierten Hauptsystemschaltkreis Rücksicht zu nehmen. Durch den zusätzlichen Nebenprozessor im zentralen Sicherheitsschaltkreis ist die Auswertung von komplexen und unterschiedlichen Fahrzeugbusdaten möglich. Ebenso sind per Software komplexe Sicherheitsalgorithmen für im Steuergerät angeordnete zentrale Sensoren oder über periphere Sensorschnittstellen mit dem Steuergerät verbundene periphere Sensoren darstellbar.

Bei den Personenschutzmitteln kann es sich beispielsweise um innere Insassenschutzmittel, wie Airbags, Gurtstraffer, crashaktive Kopfstützen, einsetzbare Sitzkomponenten, wie Seitenwangen, Überrollbügel etc. und auch um äußere Fußgängerschutzmittel, wie Airbags, crashaktive Fronthaube etc. handeln. Es sind jedoch auch aktive Personenschutzmittel, wie beispielsweise Bremseingriffe oder Fahrdynamikregelungseingriffe denkbar. Unter dem Begriff Ansteuern wird nachfolgend die Aktivierung dieser Personenschutzmittel gemeint. Das bedeutet, dass beispielsweise bei Personenschutzmitteln mit pyrotechnischen Auslöseelementen, wie Airbags, entsprechende Zündladungen durch Bestromung zum Zünden gebracht werden. Bei Personenschutzmitteln mit elektromagnetischen Auslöseelementen, wie beispielsweise Überrollbügel, wird durch einen Aktivierungsstrom die elektromagnetische Vorrichtung aktiviert.

Bei den auslöserelevanten Informationen kann es sich um erfasste physikalische Größen handeln, welche von unterschiedlichen Sensoren, wie Beschleunigungssensoren, Luftdrucksensoren, Körperschallsensoren, Umfeldsensoren erfasst oder auch von anderen Fahrzeugsystemen, wie beispielweise einer Fahrdynamikregelung oder einem Bremssystem zur Verfügung gestellte werden. Zudem sind auch aus den erfassten physikalischen Größen abgeleitete Größen möglich, so dass beispielsweise ein gefiltertes Beschleunigungssignal oder ein integriertes Beschleunigungssignal als auslöserelevante Information ausgewertet werden kann.

Unter dem zentralen Sicherheitsschaltkreis wird nachfolgend ein integrierter Schaltungsbaustein verstanden, welcher den Nebenprozessor, mindestens eine externe Busschnittstelle, mindestens eine interne Busschnittstelle und weiteren Komponenten umfasst. Unter dem integrierten Hauptsystemschaltkreis wird nachfolgend ein sogenannter System-ASIC-Baustein verstanden, der neben anderen Komponenten insbesondere verschiedenste Treiberschaltkreise zur Aktivierung der Personenschutzmittel umfasst.

Durch die in den abhängigen Ansprüchen aufgeführten Maßnahmen und Weiterbildungen sind vorteilhafte Verbesserungen des im unabhängigen Patentanspruch 1 angegebenen Steuergeräts für ein Personenschutzsystem möglich.

Besonders vorteilhaft ist, dass der integrierte Hauptsystemschaltkreis weiter ausgeführt ist, zumindest eine interne Systemspannung des Steuergeräts zu erzeugen. So kann der integrierte Hauptsystemschaltkreis beispielsweise eine aus einer Energiereserve gepufferte Versorgungsspannung sowie weitere Versorgungsspannungen für den Hauptprozessor, den zentralen Sicherheitsschaltkreis und andere Komponenten des Steuergeräts bereitstellen.

In vorteilhafter Ausgestaltung des Steuergeräts kann mindestens ein integrierter Systemschaltkreis als weitere Komponente des Steuergeräts vorhanden und mit dem mindestens einen Steuergerätedatenbus verbunden sein. Hierbei kann der mindestens eine integrierte Systemschaltkreis ausgeführt sein, in Abhängigkeit des mindestens einen Auslösesignals und des mindestens einen Freigabesignals mindestens ein weiteres Ansteuersignal zur Auslösung von mindestens einem weiteren Auslöseelement der Personenschutzmittel zu erzeugen und auszugeben. Analog zum integrierten Hauptsystemschaltkreis kann der mindestens eine integrierte Systemschaltkreis System-ASIC-Baustein ausgeführt sein, der verschiedenste Treiberschaltkreise zur Aktivierung der weiteren Personenschutzmittel umfasst. Im Unterschied zum integrierten Hauptsystemschaltkreis erzeugt der mindestens eine integrierte Systemschaltkreis keine internen Systemspannungen für das Steuergerät. Durch den Einsatz des integrierten Hauptsystemschaltkreises und weiteren integrierten Systemschaltkreisen können einfach verschiedene Gruppen von Personenschutzmitteln gebildet und in Abhängigkeit von unterschiedlichen auslöserelevanten Informationen aktiviert werden. Des Weiteren können der integrierte Hauptsystemschaltkreis und/oder der mindestens eine integrierte Systemschaltkreis jeweils mindestens eine periphere Sensorschnittstelle umfassen, welche ausgeführt ist, Sensorsignale von mindestens einem peripheren Sensor zu empfangen und aufzubereiten. Hierbei stellen der integrierte Hauptsystemschaltkreis und/oder der mindestens eine integrierte Systemschaltkreis die aufbereiteten Sensorsignale über den internen Systemdatenbus zur Verfügung.

In weiterer vorteilhafter Ausgestaltung des Steuergeräts kann der zentrale Sicherheitsschaltkreis eine flashspeicherfreie Speichereinrichtung mit mindestens einer Speichereinheit umfassen, welche ausgeführt ist, ein internes Selbsttestprogramm und/oder ein Bootloaderprogramm und/oder beim Systemstart vom Hauptprozessor empfangenen Programmcode zu speichern und einen Arbeitsspeicher für den mindestens einen Nebenprozessor bereitzustellen. So kann beispielsweise eine erste Speichereinheit als flüchtiger Arbeitsspeicher ausgeführt sein, und eine zweite Speichereinheit kann beispielsweise als flüchtiger Programmdatenspeicher ausgeführt sein. Eine dritte Speichereinheit kann beispielsweise als flüchtiger Programmcodespeicher ausgeführt sein. Hierbei kann Programmcode initial vom Hauptprozessor gesichert über den mindestens einen Steuergerätedatenbus an den zentraler Sicherheitsschaltkreis übertragen werden. Der übertragene Programmcode kann durch einen integrierten Selbsttest initial auf korrekten Inhalt überprüft und gegen Veränderung im laufenden Betrieb verriegelt werden. Optional ist eine zyklische Überprüfung des Programmcodes möglich. Auch Programmdaten können initial vom Hauptprozessor über den mindestens einen Steuergerätedatenbus an den zentralen Sicherheitsschaltkreis gesichert übermittelt werden. Analog können die übertragenen Programmdaten durch einen integrierten Selbsttest initial auf korrekten Inhalt überprüft und gegen Veränderung im laufenden Betrieb verriegelt werden. Optional ist eine zyklische Überprüfung der Programmdaten möglich. Zudem kann in einer weiteren nichtflüchtigen Speichereinheit ein als eingebauter Masken programmierter "Bootloader" gespeichert sein, welcher nach seinem Start durch den Hauptprozessor die Handhabung der Übernahme des Programmcodes und der Programmdaten in die Speichereinrichtung des zentralen Sicherheitsschaltkreises übernimmt.

In weiterer vorteilhafter Ausgestaltung des Steuergeräts kann die mindestens eine externe Busschnittstelle einen Transceiver und eine erste Mitlesefunktion umfassen. Der Transceiver kann ausgeführt sein, externe Daten von dem mindestens einen externen Fahrzeugdatenbus zu empfangen und an den Hauptprozessor weiterzuleiten und interne Daten von dem Hauptprozessor zu empfangen und an den mindestens einen externen Fahrzeugdatenbus weiterzuleiten. Die Mitlesefunktion kann ausgeführt sein, die externen Daten und die internen Daten mitzulesen und die auslöserelevanten Informationen zu erkennen und an den Nebenprozessor weiterzuleiten. Durch die Integration der mindestens einen externen Busschnittstelle mit Transceiver in den zentralen Sicherheitsschaltkreis, kann auf weitere externe Busschnittstellenbausteine im Steuergerät verzichtet werden. Weist das Fahrzeug mehrere verschiedenen Datenbusse auf, über welche auslöserelevante Informationen übertragen werden, dann können mehrere externe Busschnittstellen in den zentralen Sicherheitsschaltkreis integriert werden. Zusätzlich kann der zentrale Sicherheitsschaltkreis eine Abschaltfunktion umfassen, welche ausgeführt ist, den Transceiver bei definierten Busfehlern abzuschalten. Dadurch kann in vorteilhafter Weise verhindert werden, dass korrupte oder falsche Daten vom Steuergerät an den korrespondierenden Fahrzeugdatenbus ausgegeben werden.

In weiterer vorteilhafter Ausgestaltung des Steuergeräts kann der mindestens eine externe Fahrzeugdatenbus ein drahtgebundener Datenbus, insbesondere ein CAN-Datenbus oder ein Flex-Ray-Datenbus oder ein LIN-Datenbus oder ein Ethernet-Datenbus, oder ein drahtloser Datenbus, insbesondere ein Bluetooth-Datenbus, sein. Im zentraler Sicherheitsschaltkreis können korrespondierende physikalische Transceiver zur direkten Anbindung an das jeweilige Fahrzeugdatenbussystem integriert sein.

In weiterer vorteilhafter Ausgestaltung des Steuergeräts kann die mindestens eine interne Busschnittstelle eine zweite Mitlesefunktion umfassen, welche ausgeführt sein kann, die Daten auf dem mindestens einen Steuergerätedatenbus mitzulesen und die auslöserelevanten Informationen zu erkennen und an den Nebenprozessor weiterzuleiten. Dadurch können von dem zentralen Sicherheitsschaltkreis auch die auslöserelevanten Informationen mitgelesen, welche in Sensordaten der peripheren Sensoren oder in Sensordaten der im Steuergerät angeordneten zentralen Sensoren enthalten sind und über den mindestens einen Steuergerätedatenbus an den Hauptprozessor übertragen werden.

In weiterer vorteilhafter Ausgestaltung des Steuergeräts kann der zentrale Sicherheitsschaltkreis ein autarkes Krypto-Modul umfassen, welches ausgeführt sein kann, redundant zum Hauptprozessor eine Authentifikationsprüfung der erkannten auslöserelevanten Informationen durchzuführen. Dadurch ist eine redundante vom Hauptprozessor unabhängige Authentizitätsprüfung der erkannten auslöserelevanten Informationen im integrierten Hauptsystemschaltkreis möglich.

In weiterer vorteilhafter Ausgestaltung des Steuergeräts kann der zentrale Sicherheitsschaltkreis eine interne Spannungsversorgung umfassen, welche ausgeführt sein kann, aus einer verpolgeschützten Versorgungsspannung und/oder aus einer Energiereserve gepufferten Versorgungsspannung mindestens eine interne Versorgungsspannung für den zentralen Sicherheitsschaltkreis zu erzeugen. Die interne Spannungsversorgung kann beispielsweise mehrere Linearregler umfassen, welche jeweils eine interne Versorgungsspannung erzeugen und der mindestens einen externen Busschnittstelle und/oder der mindestens einen interne Busschnittstelle und/oder der Speichereinrichtung und/oder dem Nebenprozessor zur Verfügung stellen können.

In weiterer vorteilhafter Ausgestaltung des Steuergeräts kann der zentrale Sicherheitsschaltkreis ein Sensordatenfiltermodul umfassen, welches ausgeführt sein kann, die auf Sensordaten basierenden auslöserelevanten Informationen gemäß vorgebbaren Eckdaten zu filtern. Durch Verwendung eines solchen Sensordatenfiltermoduls ist eine Anpassung an die im Bereich von Personenschutzsystemen verwendeten Datenfilter mit einer stromsparenden Taktung umsetzbar, welche für den Nebenprozessor eingesetzt wird.

In weiterer vorteilhafter Ausgestaltung des Steuergeräts kann der zentrale Sicherheitsschaltkreis einen Steuerschaltkreis umfassen, welcher ausgeführt sein kann, einen zentralen Sicherheitshalbleiterschalter anzusteuern, um eine Auslösespannung für das mindestens eine Auslöseelement linear oder getaktet an Erfordernisse des mindestens einen Auslöseelements anzupassen. So kann die Auslösespannung beispielsweise vor und/oder während der Auslösung angepasst werden, um die Verluste in den Treiberschaltkreisen der Personenschutzmittel über eine schnelle Pulsweitenmodulationsschnittstelle (PWM-Schnittstelle) zu reduzieren. Ebenso gehört hierzu die Möglichkeit einen neuartigen zentralen schnellen Hochstrom-Buck-Regler mit einer Kurzzeitbelastung von 40 Ampere und einem hohem Wirkungsgrad in den Auslösepfad einzubauen. Der Steuerschaltkreis kann vorzugsweise durch den Hauptprozessor angesteuert und aktiviert werden.

In weiterer vorteilhafter Ausgestaltung des Steuergeräts kann der zentrale Sicherheitsschaltkreis mindestens eine rücklesbare Parallelschnittstelle umfassen, welche ausgeführt sein kann, das mindestens eine Freigabesignal auszugeben. Dadurch ergibt sich eine erweiterbare partielle oder vollständige Freigabemöglichkeit der Personenschutzmittel. Die Freigabe kann beispielsweise durch eine geeignete Pegelvorgabe und/oder durch Übermittlung eines geeigneten, sicheren seriellen Freigabeworts und optionalem Vergleich erfolgen.

In weiterer vorteilhafter Ausgestaltung des Steuergeräts kann der zentrale Sicherheitsschaltkreis mindestens eine analoge Schnittstelle umfassen, welche ausgeführt ist, mindestens ein Analogsignal zu empfangen oder auszugeben. Über eine solche analoge Schnittstelle können beispielsweise Schaltzustände oder Verriegelungszustände eingelesen oder Warnlampen angesteuert werden.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen
Fig. 1 zeigt ein schematisches Blockdiagramm eines Ausführungsbeispiels eines erfindungsgemäßen Steuergeräts für ein Personenschutzsystem.
Fig. 2 zeigt ein schematisches Blockdiagramm einer Spannungsversorgung des erfindungsgemäßen Steuergeräts für ein Personenschutzsystem aus Fig. 1.
Fig. 3 bis 7 zeigen jeweils ein schematisches Blockdiagramm von Ausführungsbeispielen eines zentralen integrierten Sicherheitsschaltkreises des erfindungsgemäßen Steuergeräts für ein Personenschutzsystem aus Fig. 1 und 2.

### Ausführungsformen der Erfindung

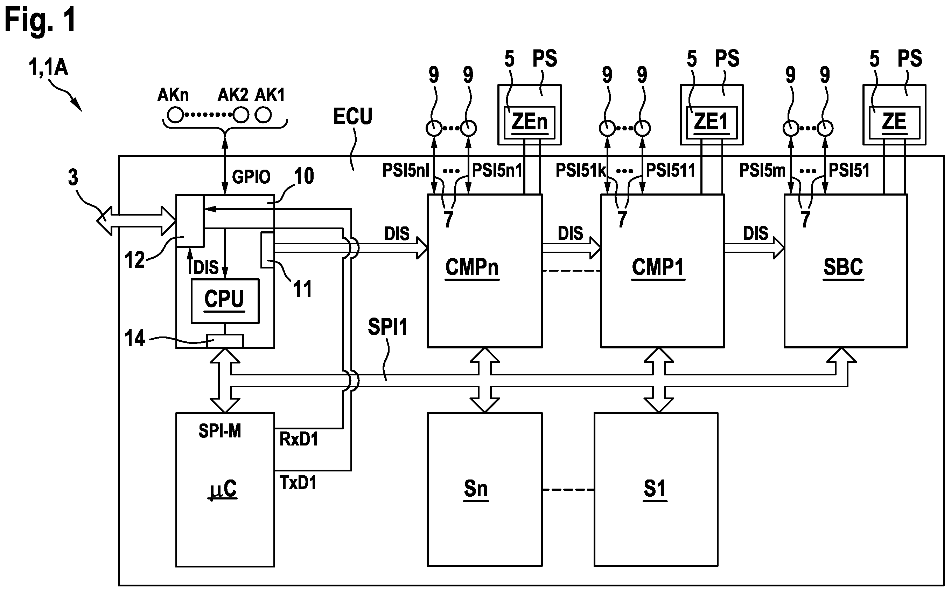

Wie aus Fig. 1 bis 7 ersichtlich ist, umfassen die dargestellten Ausführungsbeispiele eines erfindungsgemäßen Steuergeräts ECU für ein Personenschutzsystem 1 als Komponenten zumindest einen Hauptprozessor µC, welcher in Abhängigkeit von auslöserelevanten Informationen mindestens ein Auslösesignal für mindestens ein Auslöseelement 5 von Personenschutzmitteln PS des Personenschutzsystems 1 erzeugt und ausgibt, einen zentralen integrierten Sicherheitsschaltkreis 10 mit einem Nebenprozessor CPU, welcher in Abhängigkeit von den auslöserelevanten Informationen mindestens ein Freigabesignal DIS für das mindestens eine Auslöseelement 5 der Personenschutzmittel PS erzeugt und ausgibt, einen integrierten Hauptsystemschaltkreis SBC, welcher in Abhängigkeit des mindestens einen Auslösesignals und des mindestens einen Freigabesignals DIS mindestens ein Ansteuersignal zur Auslösung des mindestens einen Auslöseelements 5 der Personenschutzmittel PS erzeugt und ausgibt, und mindestens einen Steuergerätedatenbus SPI1, über welchen der Hauptprozessor µC mit den anderen Komponenten des Steuergeräts ECU kommuniziert. Hierbei umfasst der zentrale integrierte Sicherheitsschaltkreis 10 mindestens eine externe Busschnittstelle 12, über welche der Hauptprozessor µC mit mindestens einem externen Fahrzeugdatenbus 3 kommuniziert, und mindestens eine interne Busschnittstelle 14, welche mit dem mindestens einen Steuergerätedatenbus SPI1 verbunden ist, wobei die auslöserelevanten Informationen über den mindestens einen Steuergerätedatenbus SPI1 und/oder den mindestens einen externen Fahrzeugdatenbus 3 übertragbar sind. Zudem lesen die mindestens eine externe Busschnittstelle 12 und die mindestens eine interne Busschnittstelle 14 jeweils die über den mindestens einen externen Fahrzeugdatenbus 3 oder den mindestens einen Steuergerätedatenbus SPI1 kommunizierten Daten mit, erkennen die auslöserelevanten Informationen und übertragen diese zusätzlich an den Nebenprozessor CPU zur Auswertung.

Wie aus Fig. 1 weiter ersichtlich ist, ist mindestens ein integrierter Systemschaltkreis CMP1, CMPn als weitere Komponente des Steuergeräts ECU vorhanden und mit dem mindestens einen Steuergerätedatenbus SPI1 verbunden. Hierbei erzeugt der mindestens eine integrierte Systemschaltkreis CMP1, CMPn in Abhängigkeit des mindestens einen Auslösesignals und des mindestens einen Freigabesignals DIS mindestens ein weiteres Ansteuersignal zur Auslösung von mindestens einem weiteren Auslöseelement 5 der Personenschutzmittel PS und gibt dieses aus.

Wie aus Fig. 1 weiter ersichtlich ist, umfasst das dargestellte Steuergerät ECU im dargestellten Ausführungsbeispiel neben dem integrierten Hauptsystemschaltkreis SBC n weitere integrierte Systemschaltkreise, von denen beispielhaft ein erster integrierter Systemschaltkreis CMP1 und ein n-ter integrierter Systemschaltkreis CMPn dargestellt sind. Hierbei sind sowohl der integrierte Hauptsystemschaltkreis SBC als auch die weiteren integrierten Systemschaltkreise CMP1, CMPn jeweils als ASIC-Bausteine (ASIC: Anwendungsspezifischer integrierter Schaltkreis) ausgeführt. Zur Aktivierung von zugeordneten Personenschutzmitteln PS umfasst der integrierte Hauptsystemschaltkreis SBC im dargestellten Ausführungsbeispiel einen nicht näher bezeichneten Treiberschaltkreis mit einem als Zündelement ZE ausgeführten Auslöseelement 5. Zur Aktivierung von zugeordneten weiteren Personenschutzmitteln PS umfasst der erste integrierte Systemschaltkreis CMP1 im dargestellten Ausführungsbeispiel einen nicht näher bezeichneten Treiberschaltkreis mit einem als erstes Zündelement ZE1 ausgeführten Auslöseelement 5. Der n-te integrierte Systemschaltkreis CMPn umfasst zur Aktivierung von zugeordneten weiteren Personenschutzmitteln PS im dargestellten Ausführungsbeispiel einen nicht näher bezeichneten Treiberschaltkreis mit einem als n-tes Zündelement ZEn ausgeführten Auslöseelement 5. Durch den Einsatz des integrierten Hauptsystemschaltkreises SBC und den weiteren integrierten Systemschaltkreisen CMP1, CMPn können einfach verschiedene Gruppen von Personenschutzmitteln PS gebildet und in Abhängigkeit von unterschiedlichen auslöserelevanten Informationen aktiviert werden.

Zudem umfassen der integrierte Hauptsystemschaltkreis SBC und die weiteren integrierten Systemschaltkreise CMP1, CMPn im dargestellten Ausführungsbeispiel des Steuergeräts ECU jeweils mindestens eine periphere Sensorschnittstelle 7, welche Sensorsignale von mindestens einem peripheren Sensor 9 empfängt und aufbereitet. Im dargestellten Ausführungsbeispiel sind die peripheren Sensorschnittstellen 7 jeweils als PSl5-Schnittstellen PSI51, PSI5m, PSI511, PSI51k, PSI5n1, PSI5nl ausgeführt. Wie aus Fig. 1 weiter ersichtlich ist, ist der integrierte Hauptsystemschaltkreis SBC im dargestellten Ausführungsbeispiel über m PSI5-Schnittstellen PSI51, PSI5m, von denen eine erste PSI5 Schnittstelle PSI51 und eine m-te PSl5-Schnittstelle PSI5m dargestellt sind, mit m Sensoren 9 verbunden, von denen nur zwei Sensoren 9 dargestellt sind. Zudem ist der erste integrierte Systemschaltkreis CMP1 im dargestellten Ausführungsbeispiel über k PSl5-Schnittstellen PSI511, PSI51k, von denen eine erste PSI5 Schnittstelle PSI511 und eine k-te PSl5-Schnittstelle PSI51k dargestellt sind, mit k Sensoren 9 verbunden, von denen nur zwei Sensoren 9 dargestellt sind. Des Weiteren ist der n-te integrierte Systemschaltkreis CMPn im dargestellten Ausführungsbeispiel über I PSl5-Schnittstellen PSI5n1, PSI5lk, von denen eine erste PSI5 Schnittstelle PSI5n1 und eine I-te PSl5-Schnittstelle PSI5nl dargestellt sind, mit I Sensoren 9 verbunden, von denen nur zwei Sensoren 9 dargestellt sind.

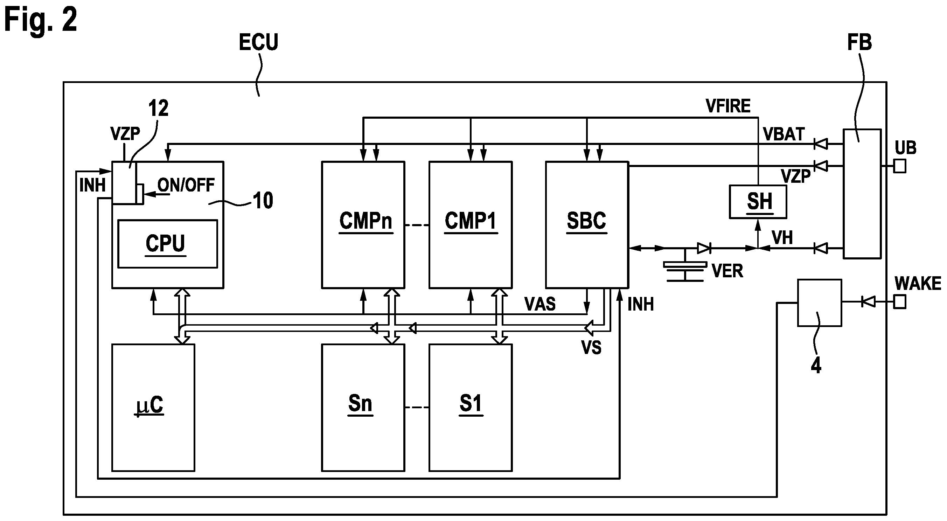

Wie aus Fig. 2 weiter ersichtlich ist, empfängt ein Filterblock FB eine Bordnetzspannung UB und stellt eine verpolgeschützte Versorgungsspannung VBat zur Verfügung, welche an den zentralen integrierten Sicherheitsschaltkreis 10 an den integrierten Hauptsystemschaltkreis SBC und an die weiteren integrierten Systemschaltkreise CMP1, CMPn angelegt wird. Zudem stellt der Filterblock FB dem integrierten Hauptsystemschaltkreis SBC eine weitere Versorgungsspannung VZP zur Verfügung, aus welcher der integrierte Hauptsystemschaltkreis SBC weitere interne Systemspannungen VS erzeugt, von welchen in Fig. 2 beispielhaft ein Bündel von internen Systemspannungen VS dargestellt und bezeichnet ist. Diese internen Systemspannungen VS dienen beispielsweise zur Spannungsversorgung von internen Sensoren S1, Sn des Steuergeräts ECU, des Hauptprozessors µC (Core, Speicher, ADC, Schnittstellen e.g. SPI etc.), und zur Schnittstellenversorgung des oder der nicht dargestellten internen Datenbusse in den weiteren integrierten Systemschaltkreisen CMP1, CMPn 14, welche mit dem internen Steuergerätedatenbus SPI1 verbunden sind, und auch zur Versorgung der mindestens einen internen Busschnittstelle 14 und der mindestens einen externen Busschnittstelle 12 des zentralen integrierten Sicherheitsschaltkreises 10. Abhängig von einem flexiblen Spannungsreglerkonzept des zentralen integrierten Sicherheitsschaltkreises 10 können erforderliche Versorgungsspannungen auch intern in den jeweiligen Komponenten des Steuergeräts ECU erzeugt werden. Die weitere Versorgungsspannung VZP wird auch der externen Schnittstelle 12 in dem zentralen Sicherheitsschaltkreis 10 zur Verfügung gestellt. Zudem stellt der Filterblock FB eine Hilfsspannung VH bereit, welche einen Zündstrom für einen zentralen Sicherheitshalbleiter SH zur Verfügung stellt. Zusätzlich oder alternativ kann der Sicherheitshalbleiter SH von einer Energiereserve VER versorgt werden. Wie aus Fig. 2 weiter ersichtlich ist, stellt der Sicherheitshalbleiter SH dem integrierten Hauptsystemschaltkreis SBC und den integrierten Systemschaltkreisen CMP1, CMPn eine Auslösespannung VFIRE zur Verfügung, welche von den korrespondierenden Treiberschaltungen zur Aktivierung der Auslöseelemente 5 verwendet wird. Des Weiteren erzeugt der integrierte Hauptsystemschaltkreis SBC eine von der Energiereserve VER gepufferte Versorgungsspannung VAS für den zentralen Sicherheitsschaltkreis 10 und die integrierten Systemschaltkreise CMP1, CMPn. Wie aus Fig. 2 weiter ersichtlich ist, kann das Steuergerät über eine Aufwachfunktion aktiviert werden. Hierzu wandelt ein Pegelumsetzer 4 ein externes Aufwachsignal WAKE, das beispielsweise durch eine Pegeländerung repräsentiert wird, in einen entsprechenden Spannungspegel um, welcher an die externen Schnittstelle 12 in dem zentralen Sicherheitsschaltkreis 10 angelegt wird. Die externe Schnittstelle 12 gibt dann ein entsprechendes Freigabesignal INH an den zentralen integrierten Sicherheitsschaltkreis 10 aus.

Wie aus Fig. 1 weiter ersichtlich ist, ist der interne Steuergerätedatenbus SPI1 im dargestellten Ausführungsbeispiel als SPI-Datenbus (SPI: Serial Peripheral Interface) ausgeführt, wobei der Hauptprozessor µC als Bus-Master über entsprechende Auswahlsignale CX_X (Chip-Select) einer an den Steuergerätedatenbus SPI1 angekoppelten Komponente den Steuergerätedatenbus SPI1 zur Datenübertragung zuteilt. Zu diesen mit dem Steuergerätedatenbus SPI1 verbundenen Komponenten gehören im dargestellten Ausführungsbeispiel auch n zentrale Sensoren S1, Sn, von denen beispielhaft ein erster Sensor S1 und ein n-ter Sensor Sn dargestellte sind. Der mindestens eine externe Fahrzeugdatenbus 3 ist im dargestellten Ausführungsbeispiel als CAN-Datenbus ausgeführt. Zudem können auch andere geeignete drahtgebundene Datenbusse oder drahtlose Datenbusse mit dem zentralen Sicherheitsschaltkreis 10 verbunden werden.

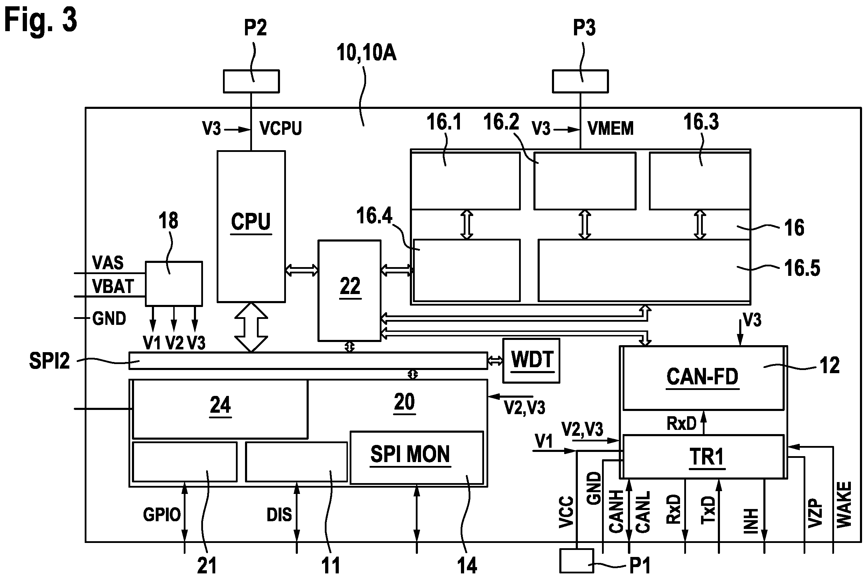

Nachfolgend werden unter Bezugnahme auf Fig. 3 bis 7 verschiedenen Ausführungsbeispiele des zentralen integrierten Sicherheitsschaltkreises 10, 10A, 10B, 10C, 10D, 10E beschrieben.

Wie aus Fig. 3 bis 7 weiter ersichtlich ist, umfasst der zentrale integrierten Sicherheitsschaltkreis 10, 10A, 10B, 10C, 10D, 10E in den dargestellten Ausführungsbeispielen jeweils eine flashspeicherfreie Speichereinrichtung 16 mit drei Speichereinheiten 16.1, 16.2, 16.3 und zwei Steuerschaltkreisen 16.4, 16.5 für die drei Speichereinheiten 16.1, 16.2, 16.3. Hierbei steuert ein erster Steuerschaltkreis eine erste Speichereinheit 16.1, welche einen Arbeitsspeicher für den Nebenprozessor CPU bereitstellt. Ein zweiter Steuerschaltkreis 16.5 steuert eine zweite Speichereinheit 16.2, in welcher ein maskenprogrammiertes internes Selbsttestprogramm und ein maskenprogrammiertes Bootloaderprogramm gespeichert sind. Zudem ist beim Systemstart vom Hauptprozessor µC empfangener Programmcode in der zweiten Speichereinheit 16.2 gespeichert. Außerdem steuert der zweite Steuerschaltkreis 16.5 eine dritte Speichereinheit 16.3, in welcher beim Systemstart vom Hauptprozessor µC empfangene Programmdaten gespeichert sind. Des Weiteren umfasst der zentrale integrierte Sicherheitsschaltkreis 10, 10A, 10B, 10C, 10D, 10E einen internen Datenbus SPI2, welcher ebenfalls als SPI-Datenbus (SPI: Serial Peripheral Interface) ausgeführt ist, wobei der Nebenprozessor CPU sowie eine weitere Schnittstellengruppe 20, welche mindestens eine rücklesbare Parallelschnittstelle 11 und mindestens eine Analogschnittstelle 21 sowie die interne Busschnittstelle 14 umfasst, mit dem internen Datenbus SPI2 verbunden sind. Die mindestens eine rücklesbare Parallelschnittstelle 11 und die mindestens eine Analogschnittstelle 21 werden von einem weiteren Steuerschaltkreis 24 gesteuert. Hierbei wird die mindestens eine rücklesbare Parallelschnittstelle eingesetzt, um das mindestens eine Freigabesignal DIS auszugeben. Das bedeutet, dass im dargestellten Ausführungsbeispiel des zentralen Sicherheitsschaltkreises 10 n rücklesbare Parallelschnittstellen 11 für die n integrierten Systemschaltkreise CMP1, CMPn und eine rücklesbare Parallelschnittstelle 11 für den integrierten Hauptsystemschaltkreis SBC vorhanden sind. Zudem sind n Analogschnittstellen 21 vorhanden, um Analogsignale GPIO von den k Analogkomponenten AK1, AK2, AKn zu empfangen, von denen in Fig. 1 beispielhaft drei Analogkomponenten AK1, AK2, AKn dargestellt sind, oder an die k Analogkomponenten AK1, AK2, AKn auszugeben. Um verschiedene Datenverbindungen herstellen zu können, weist der der zentrale integrierte Sicherheitsschaltkreis 10, 10A, 10B, 10C, 10D, 10E ein Datenkoppelfeld 22 auf, welches mit dem internen Datenbus SPI2 des Sicherheitsschaltkreises 10, 10A, 10B, 10C,10D, 10E, dem Nebenprozessor CPU, der Speichereinrichtung 16 und mit der externen Busschnittstelle 12 verbunden ist.

Wie aus Fig. 3 bis 6 weiter ersichtlich ist, umfasst die externe Busschnittstelle 12 einen Transceiver TR1, welcher externe Daten RxD über die Busleitungen CANH, CANL von dem mindestens einen externen Fahrzeugdatenbus 3 empfängt und an den Hauptprozessor µC weiterleitet und interne Daten TxD von dem Hauptprozessor µC empfängt und an die Busleitungen CANH, CANL des mindestens einen externen Fahrzeugdatenbusses 3 weiterleitet, und eine erste Mitlesefunktion CAN-FD, welche die externen Daten RxD und die internen Daten TxD mitliest und die auslöserelevanten Informationen erkennt und an den Nebenprozessor CPU weiterleitet. Im dargestellten Ausführungsbeispiel umfasst das Fahrzeug nur den als CAN-Bus ausgeführten Fahrzeugdatenbus 3. Alternativ kann der Fahrzeugdatenbus 3 als Flex-Ray-Datenbus oder als LIN-Datenbus oder als Ethernet-Datenbus ausgeführt sein. Selbstverständlich können zusätzlich oder alternativ auch drahtlose Datenbusse, wie beispielsweise ein Bluetooth-Datenbus verwendet werden. Bei nicht dargestellten Ausführungsbeispielen des erfindungsgemäßen Steuergeräts ECU umfasst das Fahrzeug mehr als nur einen Fahrzeugdatenbus 3. Bei mehreren Fahrzeugdatenbussen 3 weist der zentrale integrierte Sicherheitsschaltkreis 10 zumindest für die Fahrzeugdatenbusse 3 entsprechende externe Busschnittstellen 12 auf, über welche auslöserelevante Informationen übertragen werden.

Wie aus Fig. 3 bis 7 weiter ersichtlich ist, umfasst die interne Busschnittstelle 14 eine zweite Mitlesefunktion SPI_MON, welche die Daten auf dem mindestens einen Steuergerätedatenbus SPI1 mitliest und die auslöserelevanten Informationen erkennt und diese über den internen Datenbus SPI2 an den Nebenprozessor CPU weiterleitet.

Wie aus Fig. 3 weiter ersichtlich ist, umfasst das dargestellte erste Ausführungsbeispiel des zentralen Sicherheitsschaltkreises 10A eine interne Spannungsversorgung 18, welches aus der verpolgeschützten Versorgungsspannung VBAT und aus der aus der Energiereserve VER gepufferten Versorgungsspannung VAS drei interne Versorgungsspannungen V1, V2, V3 für den zentralen Sicherheitsschaltkreis 10 erzeugt. Hierbei wird eine erste Versorgungsspannung V1 als über einen ersten externen Pufferspeicher P1 gepufferte Versorgungsspannung VCC dem Transceiver TR1 bereitgestellt. Eine zweite interne Versorgungsspannung V2 und eine dritte Versorgungsspannung werden der Schnittstellengruppe 20 und der externen Busschnittstelle bereitgestellt. Zudem wird die dritte Versorgungsspannung V3 als über einen zweiten Pufferspeicher P2 gepufferte interne Versorgungsspannung VCPU dem Nebenprozessor CPU zur Verfügung gestellt. Zusätzlich wird die dritte Versorgungsspannung V3 als über einen dritten Pufferspeicher P3 gepufferte interne Versorgungsspannung VMEM der Speichereinrichtung 16 zur Verfügung gestellt.

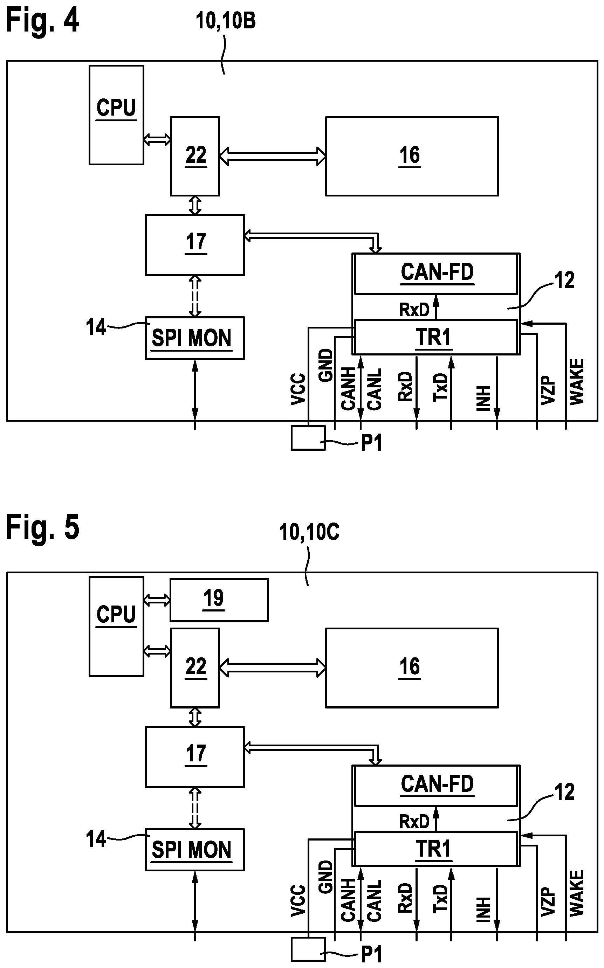

Wie aus Fig. 4 weiter ersichtlich ist, umfasst das dargestellte zweite Ausführungsbeispiel des zentralen Sicherheitsschaltkreises 10B ein autarkes Krypto-Modul 17, welches redundant zum Hauptprozessor µC eine Authentifikationsprüfung der erkannten auslöserelevanten Informationen durchführt. Wie aus Fig. 4 weiter ersichtlich ist, empfängt das Krypto-Modul 17 die auslöserelevanten Informationen von der ersten Mitlesefunktion CAN-FD und von der zweiten Mitlesefunktion SPI_MON. Die authentifizierten auslöserelevanten Informationen werden dann über das Datenkoppelfeld 22 an den Nebenprozessor CPU übertragen.

Wie aus Fig. 5 weiter ersichtlich ist, umfasst das dargestellte dritte Ausführungsbeispiel des zentralen Sicherheitsschaltkreises 10C ein Sensordatenfiltermodul 19, welches die auf Sensordaten basierenden auslöserelevanten Informationen gemäß vorgebbaren Eckdaten filtert. Bei einem nicht dargestellten Ausführungsbeispiel des zentralen Sicherheitsschaltkreises 10C mit Sensordatenfiltermodul 19, umfasst dieses kein Krypto-Modul 7.

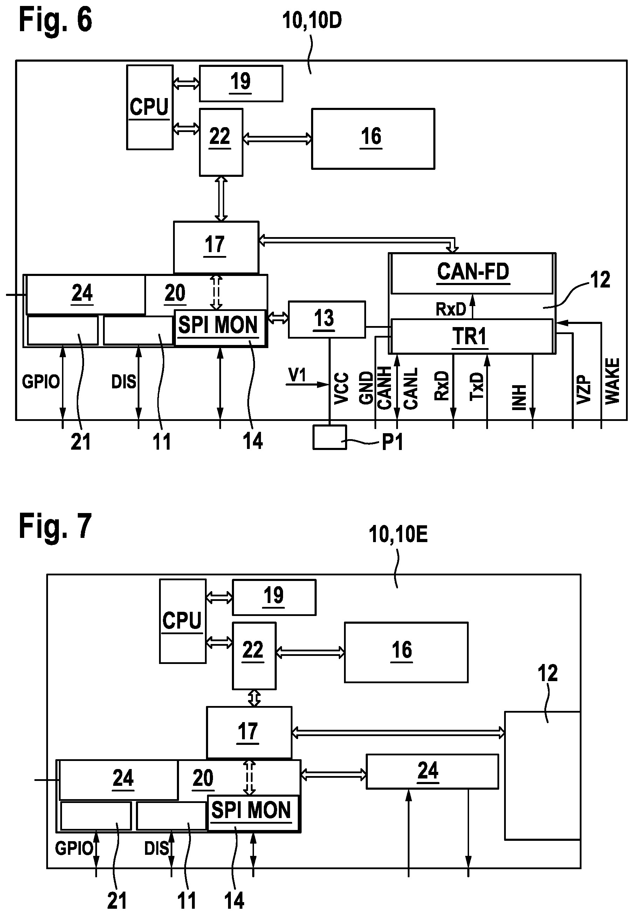

Wie aus Fig. 6 weiter ersichtlich ist, umfasst das dargestellte vierte Ausführungsbeispiel des zentralen Sicherheitsschaltkreises 10D eine Abschaltfunktion 13, welche den Transceiver TR1 bei definierten Busfehlern abschaltet. Hierbei erfolgt die Ansteuerung der Abschaltfunktion autorisiert von dem Hauptprozessor µC über den Steuergerätedatenbus SPI1 und die interne Busschnittstelle 14. Die Abschaltfunktion 13 kann unabhängig von der Verwendung des Krypto-Moduls 17 und/oder des Sensordatenfiltermoduls 19 eingesetzt werden.

Wie aus Fig. 7 weiter ersichtlich ist, umfasst das dargestellte fünfte Ausführungsbeispiel des zentralen Sicherheitsschaltkreises 10E einen weiteren Steuerschaltkreis 24, welcher den zentralen Sicherheitshalbleiterschalter SH ansteuert, um die Auslösespannung VFIRE für das mindestens eine Auslöseelement 5 linear oder getaktet an Erfordernisse des mindestens einen Auslöseelements 5 anzupassen. Hierzu empfängt der weitere Steuerschaltkreis 24 entsprechende aktuelle Messsignale, wie beispielsweise aktuelle Spannungswerte der Hilfsspannung VH und/oder der Energiereserve VER sowie ein Sollsignal der einzustellenden Auslösespannung und gibt entsprechende Steuersignale an den zentralen Sicherheitshalbleiterschalter SH aus. Hierbei kann die Ansteuerung des zentralen Sicherheitshalbleiterschalter SH durch den Hauptprozessor µC über den Steuergerätedatenbus SPI1 aktiviert werden. Der weitere Steuerschaltkreis 24 für den zentralen Sicherheitshalbleiterschalter SH kann unabhängig von der Verwendung des Krypto-Moduls 17 und/oder des Sensordatenfiltermoduls 19 und/oder der Abschaltfunktion 13 eingesetzt werden.

## Patentansprüche

1. Steuergerät (ECU) für ein Personenschutzsystem (1), welches als Komponenten zumindest einen Hauptprozessor (µC), welcher ausgeführt ist, in Abhängigkeit von auslöserelevanten Informationen mindestens ein Auslösesignal für mindestens ein Auslöseelement (5) von Personenschutzmitteln (PS) des Personenschutzsystems (1) zu erzeugen und auszugeben, einen zentralen Sicherheitsschaltkreis (10) mit einem Nebenprozessor (CPU), welcher ausgeführt ist, in Abhängigkeit von den auslöserelevanten Informationen mindestens ein Freigabesignal (DIS) für das mindestens eine Auslöseelement (5) der Personenschutzmittel (PS) zu erzeugen und auszugeben, einen integrierten Hauptsystemschaltkreis (SBC), welcher ausgeführt ist, in Abhängigkeit des mindestens einen Auslösesignals und des mindestens einen Freigabesignals (DIS) mindestens ein Ansteuersignal zur Auslösung des mindestens einen Auslöseelements (5) der Personenschutzmittel (PS) zu erzeugen und auszugeben, und mindestens einen Steuergerätedatenbus (SPI1) umfasst, über welchen der Hauptprozessor (µC) mit den anderen Komponenten des Steuergeräts (ECU) kommuniziert, wobei der zentrale Sicherheitsschaltkreis (10) mindestens eine externe Busschnittstelle (12), über welche der Hauptprozessor (µC) mit mindestens einem externen Fahrzeugdatenbus (3) kommuniziert, und mindestens eine interne Busschnittstelle (14) umfasst, welche mit dem mindestens einen Steuergerätedatenbus (SPI1) verbunden ist, wobei die auslöserelevanten Informationen über den mindestens einen Steuergerätedatenbus (SPI1) und/oder den mindestens einen externen Fahrzeugdatenbus (3) übertragbar sind, und wobei die mindestens eine externe Busschnittstelle (12) und die mindestens eine interne Busschnittstelle (14) jeweils ausgeführt sind, die über den mindestens einen externen Fahrzeugdatenbus (3) oder den mindestens einen Steuergerätedatenbus (SPI1) kommunizierten Daten mitzulesen und die auslöserelevanten Informationen zu erkennen und zusätzlich an den Nebenprozessor (CPU) zur Auswertung zu übertragen,
**dadurch gekennzeichnet, dass** mindestens ein integrierter Systemschaltkreis (CMP1, CMPn) als weitere Komponente des Steuergeräts (ECU) vorhanden und mit dem mindestens einen Steuergerätedatenbus (SPI1) verbunden ist, wobei der mindestens eine integrierte Systemschaltkreis (CMP1, CMPn) ausgeführt ist, in Abhängigkeit des mindestens einen Auslösesignals und des mindestens einen Freigabesignals (DIS) mindestens ein weiteres Ansteuersignal zur Auslösung von mindestens einem weiteren Auslöseelement (5) der Personenschutzmittel (PS) zu erzeugen und auszugeben.

2. Steuergerät (ECU) nach Anspruch 1, **dadurch gekennzeichnet, dass** der integrierte Hauptsystemschaltkreis (SBC) weiter ausgeführt ist, zumindest eine interne Systemspannung (VS, VAS) des Steuergeräts (ECU) zu erzeugen.

3. Steuergerät (ECU) nach Anspruch 1, **dadurch gekennzeichnet, dass** der integrierte Hauptsystemschaltkreis (SBC) und/oder der mindestens eine integrierte Systemschaltkreis (CMP1, CMPn) jeweils mindestens eine periphere Sensorschnittstelle (7) umfassen, welche ausgeführt ist, Sensorsignale von mindestens einem peripheren Sensor (9) zu empfangen und aufzubereiten.

4. Steuergerät (ECU) nach einem der Ansprüche 1 bis 3, **dadurch gekennzeichnet, dass** der zentrale Sicherheitsschaltkreis (10) eine flashspeicherfreie Speichereinrichtung (16) mit mindestens einer Speichereinheit (16.1, 16.2, 16.3) umfasst, welche ausgeführt ist, ein internes Selbsttestprogramm und/oder ein Bootloaderprogramm und/oder beim Systemstart vom Hauptprozessor (µC) empfangenen Programmcode zu speichern und einen Arbeitsspeicher für den mindestens einen Nebenprozessor (CPU) bereitzustellen.

5. Steuergerät (ECU) nach einem der Ansprüche 1 bis 4, **dadurch gekennzeichnet, dass** die mindestens eine externe Busschnittstelle (12) einen Transceiver (TR1), welcher ausgeführt ist, externe Daten (RxD) von dem mindestens einen externen Fahrzeugdatenbus (3) zu empfangen und an den Hauptprozessor (µC) weiterzuleiten und interne Daten (TxD) von dem Hauptprozessor (µC) zu empfangen und an den mindestens einen externen Fahrzeugdatenbus (3) weiterzuleiten, und eine erste Mitlesefunktion (CAN-FD) umfasst, welche ausgeführt ist, die externen Daten (RxD) und die internen Daten (TxD) mitzulesen und die auslöserelevanten Informationen zu erkennen und an den Nebenprozessor (CPU) weiterzuleiten.

6. Steuergerät (ECU) nach Anspruch 5, **dadurch gekennzeichnet, dass** der zentrale Sicherheitsschaltkreis (10) eine Abschaltfunktion (13) umfasst, welche ausgeführt ist, den Transceiver (TR1) bei definierten Busfehlern abzuschalten.

7. Steuergerät (ECU) nach einem der Ansprüche 1 bis 6, **dadurch gekennzeichnet, dass** der mindestens eine externe Fahrzeugdatenbus (3) ein drahtgebundener Datenbus, insbesondere ein CAN-Datenbus oder ein Flex-Ray-Datenbus oder ein LIN-Datenbus oder ein Ethernet-Datenbus, oder ein drahtloser Datenbus, insbesondere ein Bluetooth-Datenbus, ist.

8. Steuergerät (ECU) nach einem der Ansprüche 1 bis 7, **dadurch gekennzeichnet, dass** die mindestens eine interne Busschnittstelle (14) eine zweite Mitlesefunktion (SPI_MON) umfasst, welche ausgeführt ist, die Daten auf dem mindestens einen Steuergerätedatenbus (SPI1) mitzulesen und die auslöserelevanten Informationen zu erkennen und an den Nebenprozessor (CPU) weiterzuleiten.

9. Steuergerät (ECU) nach einem der Ansprüche 1 bis 8, **dadurch gekennzeichnet, dass** der zentrale Sicherheitsschaltkreis (10) ein autarkes Krypto-Modul (17) umfasst, welches ausgeführt ist, redundant zum Hauptprozessor (µC) eine Authentifikationsprüfung der erkannten auslöserelevanten Informationen durchzuführen.

10. Steuergerät (ECU) nach einem der Ansprüche 1 bis 9, **dadurch gekennzeichnet, dass** der zentrale Sicherheitsschaltkreis (10) eine interne Spannungsversorgung (18) umfasst, welches ausgeführt ist, aus einer verpolgeschützten Versorgungsspannung (VBAT) und/oder aus einer Energiereserve (VER) gepufferten Versorgungsspannung (VAS) mindestens eine interne Versorgungsspannung (V1, V2, V3) für den zentralen Sicherheitsschaltkreis (10) zu erzeugen.

11. Steuergerät (ECU) nach einem der Ansprüche 1 bis 10, **dadurch gekennzeichnet, dass** der zentrale Sicherheitsschaltkreis (10) ein Sensordatenfiltermodul (19) umfasst, welches ausgeführt ist, die auf Sensordaten basierenden auslöserelevanten Informationen gemäß vorgebbaren Eckdaten zu filtern.

12. Steuergerät (ECU) nach einem der Ansprüche 1 bis 11, **dadurch gekennzeichnet, dass** der zentrale Sicherheitsschaltkreis (10) einen Steuerschaltkreis (15) umfasst, welcher ausgeführt ist, einen zentralen Sicherheitshalbleiterschalter (SH) anzusteuern, um eine Auslösespannung (VFIRE) für das mindestens eine Auslöseelement (5) linear oder getaktet an Erfordernisse des mindestens einen Auslöseelements (5) anzupassen.

13. Steuergerät (ECU) nach einem der Ansprüche 1 bis 12, **dadurch gekennzeichnet, dass** der zentrale Sicherheitsschaltkreis (10) mindestens eine rücklesbare Parallelschnittstelle (11) umfasst, welche ausgeführt ist, das mindestens eine Freigabesignal auszugeben.

14. Steuergerät (ECU) nach einem der Ansprüche 1 bis 13, **dadurch gekennzeichnet, dass** der zentrale Sicherheitsschaltkreis (10) mindestens eine analoge Schnittstelle (21) umfasst, welche ausgeführt ist, mindestens ein Analogsignal zu empfangen oder auszugeben.

## Claims

1. Control unit (ECU) for a personal protection system (1), which comprises as components at least one main processor (µC), which is designed to generate and output, on the basis of trigger-relevant information, at least one trigger signal for at least one trigger element (5) of personal protection means (PS) of the personal protection system (1), a central safety circuit (10) having a secondary processor (CPU), which is designed to generate and output, on the basis of the trigger-relevant information, at least one enable signal (DIS) for the at least one trigger element (5) of the personal protection means (PS), an integrated main system circuit (SBC), which is designed to generate and output, on the basis of the at least one trigger signal and the at least one enable signal (DIS), at least one activation signal for triggering the at least one trigger element (5) of the personal protection means (PS), and at least one control unit data bus (SPI1), via which the main processor (µC) communicates with the other components of the control unit (ECU), the central safety circuit (10) comprising at least one external bus interface (12), via which the main processor (µC) communicates with at least one external vehicle data bus (3), and at least one internal bus interface (14), which is connected to the at least one control unit data bus (SPI1), the trigger-relevant information being able to be transmitted via the at least one control unit data bus (SPI1) and/or the at least one external vehicle data bus (3), and each of the at least one external bus interface (12) and the at least one internal bus interface (14) being designed to monitor-read the data communicated via the at least one external vehicle data bus (3) or the at least one control unit data bus (SPI1) and to recognize the trigger-relevant information and additionally transmit said information to the secondary processor (CPU) for evaluation, **characterized in that** at least one integrated system circuit (CMP1, CMPn) is present as a further component of the control unit (ECU) and is connected to the at least one control unit data bus (SPI1), the at least one integrated system circuit (CMP1, CMPn) being designed to generate and output, on the basis of the at least one trigger signal and the at least one enable signal (DIS), at least one further activation signal for triggering at least one further trigger element (5) of the personal protection means (PS).

2. Control unit (ECU) according to Claim 1, **characterized in that** the integrated main system circuit (SBC) is also designed to generate at least one internal system voltage (VS, VAS) of the control unit (ECU).

3. Control unit (ECU) according to Claim 1, **characterized in that** each of the integrated main system circuit (SBC) and/or the at least one integrated system circuit (CMP1, CMPn) comprises at least one peripheral sensor interface (7) designed to receive and process sensor signals from at least one peripheral sensor (9).

4. Control unit (ECU) according to one of Claims 1 to 3, **characterized in that** the central safety circuit (10) comprises a flash-memory free memory device (16) having at least one memory unit (16.1, 16.2, 16.3) designed to store an internal self-test program and/or a bootloader program and/or program code received from the main processor (µC) at system startup and to provide a main memory for the at least one secondary processor (CPU).

5. Control unit (ECU) according to one of Claims 1 to 4, **characterized in that** the at least one external bus interface (12) comprises a transceiver (TR1), which is designed to receive external data (RxD) from the at least one external vehicle data bus (3) and forward said data to the main processor (µC) and to receive internal data (TxD) from the main processor (µC) and forward said data to the at least one external vehicle data bus (3), and a first monitor-read function (CAN-FD), which is designed to monitor-read the external data (RxD) and the internal data (TxD) and to recognize the trigger-relevant information and forward said information to the secondary processor (CPU).

6. Control unit (ECU) according to Claim 5, **characterized in that** the central safety circuit (10) comprises a shutdown function (13) designed to switch off the transceiver (TR1) in the event of defined bus errors.

7. Control unit (ECU) according to one of Claims 1 to 6, **characterized in that** the at least one external vehicle data bus (3) is a wired data bus, in particular a CAN data bus or a FlexRay data bus or a LIN data bus or an Ethernet data bus, or a wireless data bus, in particular a Bluetooth data bus.

8. Control unit (ECU) according to one of Claims 1 to 7, **characterized in that** the at least one internal bus interface (14) comprises a second monitor-read function (SPI_MON) designed to monitor-read the data on the at least one control unit data bus (SPI1) and to recognize the trigger-relevant information and forward said information to the secondary processor (CPU).

9. Control unit (ECU) according to one of Claims 1 to 8, **characterized in that** the central safety circuit (10) comprises an autonomous crypto module (17) designed to perform an authentication test on the recognized trigger-relevant information redundantly with respect to the main processor (µC).

10. Control unit (ECU) according to one of Claims 1 to 9, **characterized in that** the central safety circuit (10) comprises an internal power supply (18) designed to generate at least one internal supply voltage (V1, V2, V3) for the central safety circuit (10) from a reverse-polarity protected supply voltage (VBAT) and/or from an energy reserve (VER) buffered supply voltage (VAS).

11. Control unit (ECU) according to one of Claims 1 to 10, **characterized in that** the central safety circuit (10) comprises a sensor data filter module (19) designed to filter the sensor-data based trigger-relevant information according to predetermined key data.

12. Control unit (ECU) according to one of Claims 1 to 11, **characterized in that** the central safety circuit (10) comprises a control circuit (15) designed to activate a central safety semiconductor switch (SH) in order to match a trigger voltage (VFIRE) for the at least one trigger element (5) to requirements of the at least one trigger element (5) in linear or cyclic fashion.

13. Control unit (ECU) according to one of Claims 1 to 12, **characterized in that** the central safety circuit (10) comprises at least one readable parallel interface (11) designed to output the at least one enable signal.

14. Control unit (ECU) according to one of Claims 1 to 13, **characterized in that** the central safety circuit (10) comprises at least one analogue interface (21) designed to receive or output at least one analogue signal.

## Revendications

1. Appareil de commande (ECU) destiné à un système de protection de personnes (1), qui comprend en tant que composants au moins un processeur principal (µC) conçu pour générer et émettre au moins un signal de déclenchement pour au moins un élément de déclenchement (5) de moyens de protection de personnes (PS) du système de protection de personnes (1) en fonction d'informations associées à un déclenchement, un circuit de sécurité central (10) qui comprend un processeur auxiliaire (CPU) conçu pour générer et émettre au moins un signal d'activation (DIS) pour le ou les éléments de déclenchement (5) des moyens de protection de personnes (PS) en fonction des informations associées à un déclenchement, un circuit de système principal intégré (SBC) conçu pour générer et émettre au moins un signal d'attaque pour déclencher le ou les éléments de déclenchement (5) des moyens de protection de personnes (PS) en fonction du ou des signaux de déclenchement et du ou des signaux d'activation (DIS), et au moins un bus de données de l'appareil de commande (SPI1) par l'intermédiaire duquel le processeur principal (µC) communique avec les autres composants de l'appareil de commande (ECU), le circuit de sécurité central (10) comprenant au moins une interface de bus externe (12), par l'intermédiaire de laquelle le processeur principal (µC) communique avec au moins un bus de données de véhicule externe (3), et au moins une interface de bus interne (14) qui est connectée au ou aux bus de données de l'appareil de commande (SPI1), les informations associées à un déclenchement pouvant être transmises par l'intermédiaire du ou des bus de données de l'appareil de commande (SPI1) et/ou du ou des bus de données de véhicule externes (3), et la ou les interfaces de bus externes (12) et la ou les interfaces de bus internes (14) étant respectivement conçues pour lire les données communiquées par l'intermédiaire du ou des bus de données de véhicule externes (3) ou du ou des bus de données de l'appareil de commande (SPI1) et pour reconnaître les informations associées à un déclenchement et pour en outre les transmettre au processeur auxiliaire (CPU) en vue d'une évaluation, **caractérisé en ce qu'**au moins un circuit de système intégré (CMP1, CMPn) est présent en tant que composant supplémentaire de l'appareil de commande (ECU) et est connecté au ou aux bus de données de l'appareil de commande (SPI1), le ou les circuits de système intégré (CMP1, CMPn) étant conçus pour générer et émettre au moins un signal d'attaque supplémentaire pour le déclenchement d'au moins un élément de déclenchement supplémentaire (5) des moyens de protection de personnes (PS) en fonction du ou des signaux de déclenchement et du ou des signaux d'activation (DIS).

2. Appareil de commande (ECU) selon la revendication 1, **caractérisé en ce que** le circuit de système principal intégré (SBC) est en outre conçu pour générer au moins une tension de système interne (VS, VAS) de l'appareil de commande (ECU).

3. Appareil de commande (ECU) selon la revendication 1, **caractérisé en ce que** le circuit de système principal intégré (SBC) et/ou le ou les circuits de système intégrés (CMP1, CMPn) comprennent respectivement au moins une interface de capteur périphérique (7) conçue pour recevoir et traiter des signaux de capteurs provenant d'au moins un capteur périphérique (9).

4. Appareil de commande (ECU) selon l'une des revendications 1 à 3, **caractérisé en ce que** le circuit de sécurité central (10) comprend un dispositif de mémoire sans mémoire flash (16) doté d'au moins une unité de mémoire (16.1, 16.2, 16.3) conçu pour mémoriser un programme d'autotest interne et/ou un programme de chargeur d'amorçage et/ou un code de programme reçu du processeur principal (µC) au démarrage du système et pour fournir une mémoire de travail destinée au ou aux processeurs auxiliaires (CPU).

5. Appareil de commande (ECU) selon l'une des revendications 1 à 4, **caractérisé en ce que** la ou les interfaces de bus externes (12) comprennent un émetteur-récepteur (TR1) conçu pour recevoir des données externes (RxD) du ou des bus de données de véhicule externes (3) et pour les transmettre au processeur principal (µC) et pour recevoir des données internes (TxD) du processeur principal (µC) et pour les transmettre au ou aux bus de données de véhicule externes (3), et une première fonction de lecture en parallèle (CAN-FD), conçue pour lire en parallèle les données externes (RxD) et les données internes (TxD) et pour reconnaître les informations associées à un déclenchement et pour les transmettre au processeur auxiliaire (CPU).

6. Appareil de commande (ECU) selon la revendication 5, **caractérisé en ce que** le circuit de sécurité central (10) comprend une fonction d'interruption (13) conçue pour interrompre l'émetteur-récepteur (TR1) en cas d'erreurs de bus définies.

7. Appareil de commande (ECU) selon l'une des revendications 1 à 6, **caractérisé en ce que** le ou les bus de données de véhicule externes (3) sont un bus de données filaire, notamment un bus de données CAN ou un bus de données Flex-Ray ou un bus de données LIN ou un bus de données Ethernet, ou un bus de données sans fil, notamment un bus de données Bluetooth.

8. Appareil de commande (ECU) selon l'une des revendications 1 à 7, **caractérisé en ce que** la ou les interfaces de bus internes (14) comprennent une deuxième fonction de lecture en parallèle (SPI_MON) conçue pour lire en parallèle les données sur le ou les bus de données de l'appareil de commande (SPI1) et pour reconnaître les informations associées à un déclenchement et pour les transmettre au processeur auxiliaire (CPU).

9. Appareil de commande (ECU) selon l'une des revendications 1 à 8, **caractérisé en ce que** le circuit de sécurité central (10) comprend un module de chiffrement autonome (17) conçu pour effectuer, en redondance par rapport au processeur principal (µC), une vérification d'authentification des informations associées à un déclenchement reconnues.

10. Appareil de commande (ECU) selon l'une des revendications 1 à 9, **caractérisé en ce que** le circuit de sécurité central (10) comprend une alimentation en tension interne (18) conçue pour générer, à partir d'une tension d'alimentation (VBAT) protégée contre l'inversion de polarité et/ou d'une tension d'alimentation (VAS) tamponnée par une réserve d'énergie (VER), au moins une tension d'alimentation interne (V1, V2, V3) destinée au circuit de sécurité central (10).

11. Appareil de commande (ECU) selon l'une des revendications 1 à 10, **caractérisé en ce que** le circuit de sécurité central (10) comprend un module de filtre de données de capteur (19) conçu pour filtrer les informations associées à un déclenchement à base de données de capteur conformément à des données de référence prédéfinies.

12. Appareil de commande (ECU) selon l'une des revendications 1 à 11, **caractérisé en ce que** le circuit de sécurité central (10) comprend un circuit de commande (15) conçu pour attaquer un interrupteur à semi-conducteur de sécurité central (SH) afin d'adapter une tension de déclenchement (VFIRE) destinée à l'élément ou aux éléments de déclenchement (5) de manière linéaire ou cadencée aux exigences du ou des éléments de déclenchement (5).

13. Appareil de commande (ECU) selon l'une des revendications 1 à 12, **caractérisé en ce que** le circuit de sécurité central (10) comprend au moins une interface parallèle pouvant être relue (11), conçue pour émettre le ou les signaux d'activation.

14. Appareil de commande (ECU) selon l'une des revendications 1 à 13, **caractérisé en ce que** le circuit de sécurité central (10) comprend au moins une interface analogique (21) conçue pour recevoir ou émettre au moins un signal analogique.
